# EUROPEAN PATENT SPECIFICATION

(11) **EP 2 608 677 B1**
(45) Date of publication and mention of the grant of the patent: **04.06.2014**
(21) Application number: 11743540.4
(22) Date of filing: 12.08.2011
(51) Int. Cl.: A23F 3/14

(54) **A PROCESS FOR PREPARATION OF A TEA PRODUCT**
HERSTELLUNGSVERFAHREN FÜR EIN TEEPRODUKT
PROCEDE DE PREPARATION D'UN PRODUIT DE THE

(30) Priority: 14.10.2010 EP 10187615; 25.08.2010 IN MU23692010
(43) Date of publication of application: 03.07.2013
(73) Proprietor: Unilever N.V., 3013 AL Rotterdam (NL); Unilever PLC, London, Greater London EC4Y 0DY (GB)
(72) Inventor: BHOSLE, Balaji, Marotrao, Bangalore 560 066 (IN)
(74) Representative: Askew, Sarah Elizabeth
(86) International application number: PCT/EP2011/063899
(87) International publication number: WO 2012/025401

(56) References cited:
- EP-A1- 1 092 349
- DATABASE WPI Week 197715 Thomson Scientific, London, GB; AN 1977-26608Y XP002630936, & SU 526 339 A (GEOR SUBTROPICS IND) 29 September 1976 (1976-09-29)
- DATABASE WPI Week 198941 Thomson Scientific, London, GB; AN 1989-299500 XP002030224, & SU 1 472 036 A (TEA IND RES INST) 15 April 1989 (1989-04-15)

## Description

### Technical Field

The present invention relates to a process of preparation of a tea product. It particularly relates to process of preparation of black leaf tea.

### Background and Prior Art

Addition of sugar or sugar-based additives to black leaf tea is known. Such partly pre-sweetened tea are relatively low in cost.

Indian patent IN187547 of Hindustan Lever Limited (published in 2002) discloses a method of preparing a granulated tea based product comprising granulating a mixture of 15 - 70% by weight dust tea with a particle size ranging from 0.1 to 1.0 mm, 30-85% by weight of sugar based additives and optional ingredients such as chicory and at least one flavour agent. Jaggery or gur is disclosed as a preferred sugar-based additive.

Indian patent application 1750/MUM/2007 (Hindustan Unilever Limited) published in 2009 discloses a composition comprising 30 to 95 wt% black tea, 0.5 to 30 wt% chicory, 0.5 to 40 wt% binder, and 0.01 to 5 wt% of a micronutrient selected from a vitamin, calcium, zinc, iron or a combination thereof. The binder is preferably sugar, maltodextrin, gum acacia, jaggery or mixture thereof

EP 1092349 (Unilever, published in 2001) discloses a tea product with enhanced aroma and flavour comprising 15-95% by weight black tea, up to 5% of a mixture comprising fructose and glucose, up to 5% of roasted nut powder and optionally roasted chicory and flavouring agents, dairy or non-diary whiteners, starch, preservatives at an optimal level.

However, addition of sugar solutions to black leaf tea or dust tea during processing results into a sticky mass with formation of lumps leading to wastage and loss of appearance. Furthermore, such coated teas, when brewed, result into infusion with relatively high haze value.

It is therefore an object of the present invention to provide a tea product with sugar based additives.

It is another object of the present invention to provide a tea product with sugar based additives which is less sticky and substantially free of lumps.

It is a further object of the present invention to provide a tea product with sugar based additives which is easy to process.

Present inventors have surprisingly found that addition of monosaccharides leads to substantial reduction in the problem of stickiness and lump formation during processing and also results into a tea product that results into relatively less hazy infusion When brewed.

### Summary of the Invention

According to a first aspect of the present invention, there is provided a process for preparing a tea product comprising the steps of:
a. Adding aqueous solution comprising greater than 5 to 50 parts by weight monosaccharide to 50 to 95 parts by weight black leaf tea to obtain a mixture, and;
b. Drying the mixture to a water content of less than 10% by weight to obtain a tea product, wherein the monosaccharide is dextrose.

According to a second aspect of the present invention, there is provided a tea product comprising 50-95% by weight black leaf tea and greater than 5% by weight to 50% by weight monosaccharide, wherein the monosaccharide is dextrose.

According to a third aspect of the present invention there is a provided the tea product of the second aspect obtainable by the process of the first aspect.

### Detailed Description of the Invention

### The step (a)

### Monosaccharide

The term monosaccharide as used herein means a chemical compound of general formula CₙH₂ₙOₙ where n = 3-7

The monosaccharide is dextrose.

The step (a) includes adding aqueous solution comprising greater than 5 parts by weight and up to 50 parts by weight monosaccharide to 50 to 95 parts by weight black leaf tea to obtain a mixture.

The monosaccharide added during the step (a) is preferably at least 6 parts by weight, more preferably at least 8 parts by weight, most preferably at least 10 parts by weight. It is particularly preferred that the monosaccharide added during the step (a) is at least 12 parts by weight. The monosaccharide added during the step (a) is preferably up to 45 parts by weight, more preferably up to 40 parts, by weight and most preferably up to 35 parts by weight.

The monosaccharide is preferably from 5 to 60 % by weight, more preferably from 10 to 40% by weight and most preferably from 12 to 30% by weight of the aqueous solution. When the monosaccharide added during the step (a) is greater than 30 parts by weight to 50-95 parts by weight of tea, the concentration of monosaccharide is preferably in the range 35-50% by weight of the aqueous solution.

Temperature of the aqueous solution during the step (a) is preferably in the range 1-95 °C, more preferably in the range 10-90 °C, and most preferably in the range 20-70 °C. It is particularly preferred that the temperature of the aqueous solution is in the range 25-60°C.

### Black leaf tea

The term "black leaf tea" as used herein means a tea produced by promoting the aerobic oxidation of fresh leaf catechins in reactions catalyzed by tea polyphenol oxidase. The term "fermentation" is also commonly used to refer to aerobic oxidation of fresh leaf tea catechins in reactions catalyzed by tea polyphenol oxidase. The term "fresh leaf' as used herein includes buds, leaves, or stem of the plant *Camellia sinensis.*

The term "dust tea" as used herein means a black leaf tea having mean particle size in the range 0.1-1 mm.

The term "instant black tea" means a product that is obtained from extraction of the black leaf tea in hot (80-100 °C) water, followed by filtration of insoluble solids to obtain a supernatant and after removing water from the supernatant. The term "black leaf tea" as used herein does not include "black instant tea".

The black leaf tea added during the step (a) is preferably 55-90 parts by weight, more preferably 60-85 parts by weight and most preferably 65-80 parts by weight.

Black leaf tea is preferably produced by a process comprising the steps of providing fresh tea leaf, macerating fresh tea leaf, withering the tea leaf, fermenting the tea leaf and drying the tea leaf to water content less than 10% by weight.

Preferably, the addition of the aqueous solution or dispersion is by spraying. It is further preferred that the step (a) includes mixing the aqueous solution or dispersion with the black leaf tea.

### The step (b)

Preferably, during the step of drying, the mixture is contacted with a gas which is generally air. The gas temperature is in the range of preferably 10-200 °C, more preferably 50-120 °C, most preferably 60-90 °C.

The moisture content of the tea product is preferably less than 9% by weight, more preferably less than 8% by weight, and further preferably less than 7% by weight. There is no particular lower limit on the moisture content of the tea product, and the moisture content may be as low as 0% by weight

The step of drying is preferably carried out in a tray dryer, vacuum dryer, or a fluidized bed dryer.

### The tea product

The tea product comprises greater than 5% to 50% by weight monosaccharide. The tea product comprises preferably at least 6% by weight, more preferably at least 8% by weight, most preferably at least 10% by weight monosaccharide. It is particularly preferred that the tea product comprises at least 12% by weight monosaccharide. The tea product comprises preferably up to 45% by weight, more preferably up to 40% by weight, and most preferably up to 35% by weight monosaccharide.

The invention will now be demonstrated with the help of examples. The examples are by way of illustration only and do not limit the scope of the invention in any manner

### Examples

### Materials and Methods

Following materials were used in the experiments: sucrose ( E.I.D Parry (India) Limited, Chennai, India), dextrose (Riddhi Siddhi Gluco Biols Ltd, India), fructose (Ranbaxy, India), jaggery (Foodworld supermarket, India)

### Process for Making Coated Teas:

Aqueous solution/dispersion of dextrose was prepared by adding requisite amount of to water in a high shear mixer, mixing and filtering through 100 micron mesh filter and heating if required to achieve specified temperature.

Black leaf tea was transferred to a Hobart mixer and the aqueous solution was sprayed on to the black leaf tea, and the resultant mixture was mixed for about 2 minutes. The wet mixed mass was dried in a tray dryer at 80 °C for 40-70 minutes till the moisture content of the final tea product was less than 6% by weight.

Similar process was used for coating tea with other substance such as fructose, sucrose and jaggery.

Coated teas were blended with uncoated teas at specified proportions as required.

### Measurement of haze value

Water (200 mL) at 90 °C was added to tea sample (4 g of coated tea or tea blend), followed by stirring for 60 seconds. After 5 minutes, solids settle at the bottom of the container, and the infusion sample is pipetted from the top. Turbidity of the infusion sample is measured using Turbidity meter (Model - Merck TurbiQuant 1500T) in terms of Nephelometric Turbidity Units (NTU). Higher value of NTU indicates more haziness or turbidity of the infusion sample and lower values of NTU indicates lower haziness/turbidity and more transparency/clarity of the infusion sample.

### Examples 1-10: Black dust tea coated with various agents

Starting tea material used was black dust tea (mean particle size of about 0.5 mm) obtained from Indian tea gardens was used in Examples 1-10 and. Tea was coated with various coating materials according to the process described above. In all the cases The tea products obtained in the Examples were blended at various proportions with the uncoated base tea materials, and turbidity of infusions prepared from the blends was measured. The results are tabulated below

**Table 1: Examples 1-10**

| EX NO | Coating material | Conc of coating material in the solution (% by weight) | Temp of coating solution (°C) | % by weight coating material in the tea product | Remark | Coated tea product: base tea ratio | Turbidity of infusion of tea blend (NTU) |
|---|---|---|---|---|---|---|---|
| 1 | None | - | - | - | - | 0:100 | 30.7 |
| 2 | sucrose | 43 | 40 | 30 | 1,4 | 50:50 | 54.2 |
| 3 | fructose | 43 | 40 | 30 | 1 | 50:50 | 50.4 |
| 4 | jaggery | 43 | 40 | 30 | 1,4 | 50:50 | 47.6 |
| 5 | dextrose | 43 | 40 | 10 | 2 | 100:0 | 37.4 |
| 6 | dextrose | 43 | 40 | 30 | 2 | 17:83 | 32.3 |
| 6A | Same as Example 6 | | | | | 34:66 | 30.0 |
| 6B | Same as Example 6 | | | | | 50:50 | 38.4 |
| 6C | Same as Example 6 | | | | | 84:16 | 38.1 |
| 7 | dextrose | 43 | 40 | 50 | 4 | 30:70 | 37.2 |
| 8 | dextrose | 43 | 10 | 15 | 2,3 | 100:0 | 33.8 |
| 9 | dextrose | 43 | 50 | 15 | 2 | 100:0 | 30.7 |
| 10 | dextrose | 43 | 80 | 15 | 2 | 100:0 | 76.1 |

| | | | | | | | |
|---|---|---|---|---|---|---|---|
| 1 - Sticky mass - Tendency of wet coated tea to stick to heat transfer surfaces in tray dryer during processing. 2 - Less sticky - less tendency to stick to heat transfer surfaces in tray dryer during processing 3 - White specs - appearance of white specs in the tea product. 4 - Formation of lumps: 2-10% by weight tea product in form of oversize (>1 mm) lumps in case of dust tea and (>2.8 mm) lumps in case of leaf tea. | | | | | | | |

Rating 1 and 4 together means, the tea product is sticky with formation of lumps, which is not desirable.

From the results it is clear that tea blend comprising a tea product coated with dextrose (Example 6B) has significantly lower turbidity as compared to tea blends comprising a tea product coated with other sugars (Example 2,3,4). The tea product coated with dextrose when blended with uncoated base tea at various proportions provides blends having relative low turbidity (Examples 6, 6A, 6B, 6C). Furthermore, the processing characteristics and appearance of tea product coated with dextrose (Example 6b) are better as compared to tea product coated with other sugars (Examples 2-4). Tea product comprising 10% and 30% (Examples 5 and 6) have better appearance as compared to tea product comprising 50% dextrose (Example 7) which exhibits significant lump formation. Temperature of dextrose solution also plays a role in turbidity , processing and product appearance. When the temperature is low (Example 8), the tea product has some white specs which are not preferred. When the temperature is high (Example 10), the turbidity of end-cup obtained after blending is relatively high.

### Examples 11-12: Black leaf tea coated with dextrose

Examples 11 and 12 were similar to Examples 1 and 6b in all respects, respectively, except that black leaf tea (mean particle size 1.5 mm) was used as starting tea material. The results are tabulated below.

**Table 2: Examples 11-12**

| EX NO | Coating material | Remark | Turbidity of infusion of tea blend (NTU) |
|---|---|---|---|
| 11 | None | - | 18.4 |
| 12 | Dextrose | 2 | 30.4 |

The results indicate that the process of the present invention can also successfully used for black leaf tea for providing end-cup with acceptable level of turbidity when blended with uncoated tea.

Therefore by way of present invention it is now possible to provide a tea product with sugar based an additive which is less sticky and substantially free of lumps.

## Claims

1. A process for preparing a tea product comprising the steps of:
a. Adding aqueous solution comprising greater than 5 to 50 parts by weight monosaccharide to 50-95 parts by weight black leaf tea to obtain a mixture, and;
b. Drying the mixture to a water content of less than 10% by weight to obtain a tea product, wherein the monosaccharide is dextrose.

2. A process as claimed in any one of the preceding claims wherein said monosaccharide is 10-40 by weight of said aqueous solution

3. A process as claimed in any one of the preceding claims wherein temperature of said aqueous solution is 20-70 °C.

4. A tea product comprising 50-95 % by weight black leaf tea and greater than 5 % by weight to 50 % by weight monosaccharide, wherein the monosaccharide is dextrose.

5. A tea product as claimed in claim 4 comprising 6-30 wt% by weight said monosaccharide.

6. A tea product as claimed in any one of claims 4 or 5 comprising less than 10 % by weight water.

## Patentansprüche

1. Verfahren zur Herstellung eines Teeproduktes,
das die folgenden Schritte aufweist:
a. Zugeben einer wässrigen Lösung, die mehr als 5 bis 50 Gew.-Teile Monosaccharid aufweist, zu 50 bis 95 Gew.-Teilen Schwarzem Blatttee, um ein Gemisch zu erhalten; und
b. Trocknen des Gemischs bis zu einem Wassergehalt von weniger als 10 Gew.-%, um ein Teeprodukt zu erhalten, wobei das Monosaccharid Dextrose ist.

2. Verfahren nach einem der vorstehenden Ansprüche,
wobei das Monosaccharid 10 bis 40 Gew.-% der wässrigen Lösung ausmacht.

3. Verfahren nach einem der vorstehenden Ansprüche,
wobei die Temperatur der wässrigen Lösung 20 bis 70 °C beträgt.

4. Teeprodukt,
das 50 bis 95 Gew.-% Schwarzen Blatttee und mehr als 5 Gew.-% bis 50 Gew.-% Monosaccharid aufweist, wobei das Monosaccharid Dextrose ist.

5. Teeprodukt nach Anspruch 4,
das 6 bis 30 Gew.-% des Monosaccharids aufweist.

6. Teeprodukt nach einem der Ansprüche 4 oder 5,
das weniger als 10 Gew.-% Wasser aufweist.

## Revendications

1. Procédé de préparation d'un produit à base de thé comprenant les étapes consistant à :
a. ajouter une solution aqueuse comprenant plus de 5 à 50 parties en poids de monosaccharide à 50 à 95 parties en poids de feuilles de thé noir pour obtenir un mélange, et ;
b. sécher le mélange jusqu'à une teneur en eau inférieure à 10 % en poids pour obtenir le produit à base de thé, dans lequel le monosaccharide est le dextrose.

2. Procédé selon l'une quelconque des revendications précédentes, dans lequel ledit monosaccharide représente de 10 à 40 parties en poids de ladite solution aqueuse.

3. Procédé selon l'une quelconque des revendications précédentes, dans lequel la température de ladite solution aqueuse est de 20 à 70 °C.

4. Produit à base de thé contenant de 50 à 95 % en poids de feuilles de thé noir et plus de 5 % en poids à 50 % en poids de monosaccharide, dans lequel le monosaccharide est le dextrose.

5. Produit à base de thé selon la revendication 4, comprenant de 6 à 30 % en poids dudit monosaccharide.

6. Produit à base de thé selon l'une quelconque des revendications 4 ou 5, comprenant moins de 10 % en poids d'eau.
